# EUROPÄISCHE PATENTANMELDUNG

(11) **EP 3 026 602 A1**
(43) Veröffentlichungstag der Anmeldung: **01.06.2016**
(21) Anmeldenummer: 15189938.2
(22) Anmeldetag: 15.10.2015
(51) Int. Cl.: G06N 7/06, G06F 17/30

(54) **VERFAHREN ZUM RECHNERGESTÜTZTEN VERARBEITEN VON ANFRAGEN ZUR ANALYSE VON DATEN IN EINEM DATENSPEICHER**

(30) Priorität: 28.11.2014 DE 102014224415
(71) Anmelder: Siemens Aktiengesellschaft, 80333 München (DE)
(72) Erfinder: Fischer, Jan-Gregor, 85604 Zorneding (DE)

(57) **Zusammenfassung**

Die Erfindung betrifft ein Verfahren zum rechnergestützten Verarbeiten von Anfragen (RE) zur Analyse von Daten in einem Datenspeicher (DL), wobei die Anfragen (RE) jeweils eine durchzuführende Analyse der Daten des Datenspeichers (DL) spezifizieren und von einer oder mehreren Applikationen (AP) an eine Auswerteeinheit (DAA) gesendet werden, wobei die Auswerteeinheit (DAA) eine von einer jeweiligen Applikation (AP) empfangene Anfrage (RE) mittels Zugriff auf den Datenspeicher (DL) verarbeitet und das sich hieraus ergebende Resultat (RS) der Anfrage (RE) an die jeweilige Applikation (AP) überträgt. Das Verfahren zeichnet sich dadurch aus, dass in der Auswerteeinheit (DAA) basierend auf einer Anfrage-Historie (RH) von vergangenen Anfragen zukünftige Anfragen (PRE) prädiziert werden, wobei hierfür ein Prädiktionsmodell verwendet wird, das maschinell gelernt ist bzw. auf einer statistischen Analyse beruht. Die Ergebnisse (RS) der prädizierten Anfragen (PRE) werden von der Auswerteeinheit (DAA) bereits vor dem Auftreten der tatsächlichen Anfrage (RE) an die entsprechenden Applikationen (AP) übermittelt, so dass die tatsächliche Anfrage (RE) von der Applikation (AP) gar nicht mehr ausgesendet werden muss. Darüber hinaus gibt eine jeweilige Applikation (AP) der Auswerteeinheit (DAA) eine Rückmeldung, ob die prädizierte Anfrage (PRE) tatsächlich auftritt oder nicht. Basierend auf solchen Rückmeldungen passt dann die Auswerteeinheit das Prädiktionsmodell an, wodurch eine hohe Qualität des Prädiktionsmodells sichergestellt ist. Die Applikationen dienen vorzugsweise zur Überwachung des oder der technischen Systeme bzw. zur Erstellung von Berichten über das oder die technischen Systeme.

## Beschreibung

Die Erfindung betrifft ein Verfahren zum rechnergestützten Verarbeiten von Anfragen zur Analyse von Daten in einem Datenspeicher.

Aus dem Stand der Technik ist es bekannt, die Daten eines Datenspeichers mit geeigneten Algorithmen, wie z.B. maschinell gelernten Algorithmen, zu analysieren. Die Analysen können zum Beispiel durch Applikationen initiiert werden, welche Anfragen an eine dem Datenspeicher zugeordnete Auswerteeinheit richten, durch welche die Anfragen verarbeitet werden.

Je nach Anwendungsfall haben die Applikationen, die Anfragen zur Datenanalyse aussenden, unterschiedliche Anforderungen bezüglich Latenzzeiten. Diese Latenzzeiten ergeben sich durch die Anwendung des Analysealgorithmus bzw. damit verbundener Datentransfers und sollten in der Regel gering sein, damit die Applikationen die Analyseresultate schnellstmöglich erhalten können.

Zur Verringerung von Latenzzeiten ist es bekannt, die Netzwerkkommunikation zwischen den an der Datenanalyse beteiligten Komponenten (d.h. insbesondere zwischen Datenspeicher, Auswerteeinheit und Applikationen) durch deren Anordnung in räumlicher Nähe zu reduzieren. Ferner wird vorgeschlagen, verbesserte Kommunikationsmedien mit geringer Latenzzeit zur Übertragung von Informationen im Zusammenhang mit Datenanalysen zu nutzen. Die genannten Ansätze sind jedoch sehr aufwändig und teuer.

Die Druckschrift US 2011/0055202 A1 beschreibt die Prädiktion von Anfragen eines Nutzers in einem Computernetz unter Verwendung eines prädiktiven Modells, welches eine Anfrage-Historie berücksichtigt. Bestimmte prädizierte Anfragen werden vor deren tatsächlichem Auftreten ausgeführt und deren Ergebnisse zum Zugriff durch die Anfragen gespeichert.

Aufgabe der Erfindung ist es, ein einfaches Verfahren zum rechnergestützten Verarbeiten von Anfragen zur Analyse von Daten in einem Datenspeicher zu schaffen, welches die Analyseresultate mit geringer Zeitverzögerung bereitstellt.

Diese Aufgabe wird durch die unabhängigen Patentansprüche gelöst. Weiterbildungen der Erfindung sind in den abhängigen Ansprüchen definiert.

In dem erfindungsgemäßen Verfahren werden die verarbeiteten Anfragen von einer oder mehreren Applikationen an eine Auswerteeinheit gesendet. Die Anfragen spezifizieren jeweils eine durchzuführende Analyse der Daten des Datenspeichers. Die Auswerteeinheit verarbeitet eine durch eine jeweilige Applikation gesendete und bei sich empfangene Anfrage mittels Zugriff auf den Datenspeicher und überträgt das sich hieraus ergebende Resultat der Anfrage an die jeweilige Applikation. Das erfindungsgemäße Verfahren zeichnet sich durch die nachfolgend beschriebenen Schritte a) bis c) aus, wobei die Schritte lediglich zur besseren Referenzierung der Merkmale des Verfahrens dienen. Im Besonderen können die Merkmale des Verfahrens auch auf andere Weise in Schritte bzw. weitere Teilschritte eingeteilt werden.

In einem Schritt a) des erfindungsgemäßen Verfahrens wird bei Empfang einer Anfrage einer jeweiligen Applikation in der Auswerteeinheit eine Anfrage-Historie, die durch die Auswerteeinheit erfasst wurde und vergangene Anfragen der jeweiligen Applikation umfasst, aktualisiert, indem die Auswerteeinheit die empfangene Anfrage zur Anfrage-Historie hinzufügt.

In einem Schritt b) wird in der Auswerteeinheit die aktualisierte Anfrage-Historie mittels eines Prädiktionsmodells verarbeitet. Das Prädiktionsmodell ist basierend auf Trainingsdaten umfassend vorgegebene Anfrage-Historien gelernt oder es beruht auf einer statistischen Analyse von Trainingsdaten umfassend vorgegebene Anfrage-Historien. Mittels des Prädiktionsmodells werden aus der aktualisierten Anfrage-Historie ein oder mehrere zukünftige Anfragen prädiziert, denen jeweils ein prädizierter Sendezeitpunkt der (zukünftigen) Anfrage in der jeweiligen Applikation, eine prädizierte Verarbeitungsdauer der (zukünftigen) Anfrage und ein Wahrscheinlichkeitsmaß (d.h. die Wahrscheinlichkeit oder eine davon abhängige Größe) für das Auftreten der (zukünftigen) Anfrage bei der jeweiligen Applikation zugeordnet ist. Mit anderen Worten werden zukünftigen Anfragen mit entsprechenden Parametern sowie zusätzlich einem prädizierten Sendezeitpunkt, einer prädizierten Verarbeitungsdauer und einem Wahrscheinlichkeitsmaß ermittelt.

Prädiktionsmodelle, die auf maschinellen Lernverfahren beruhen, sind an sich aus dem Stand der Technik bekannt. Vorzugsweise wird im erfindungsgemäßen Verfahren ein Prädiktionsmodell verwendet, das auf einem neuronalen Netz und/oder Entscheidungsbäumen und/oder Support Vector Machines und/oder einem Regressionsverfahren und/oder auf einem Clustering-Verfahren basiert. Für das Lernen solcher Prädiktionsmodelle sind erfindungsgemäß Anfrage-Historien vorgegeben, wobei für jede Historie auch angegeben ist, welche Anfragen mit Sendezeitpunkt, Verarbeitungsdauer und Wahrscheinlichkeit des Auftretens auf die jeweilige Anfrage-Historie folgen können. Als Ergebnis des Lernens erhält man dann das Prädiktionsmodell, das für eine aktualisierte Anfrage-Historie gemäß einer neuen empfangenen Anfrage eine Ausgabe in der Form von prädizierten Anfragen mit Sendezeitpunkt, Verarbeitungsdauer und Wahrscheinlichkeitsmaß generiert.

Wie oben beschrieben, kann das Prädiktionsmodell ggf. auch auf einer statistischen Analyse beruhen. Dabei werden aus den Trainingsdaten z.B. Häufigkeiten von auf einer Anfrage-Historie folgenden Anfragen ermittelt und hierdurch Wahrscheinlichkeiten für das Auftreten von neuen Anfragen abgeleitet. Hierüber können dann Regeln für ein Prädiktionsmodell erstellt werden, basierend auf denen die prädizierten Anfragen in Abhängigkeit von einer entsprechenden Anfrage-Historie bestimmt werden. Im Gegensatz zu Prädiktionsmodellen, die auf maschinellem Lernen basieren, fließt bei der Erstellung des Prädiktionsmodells basierend auf einer statistischen Analyse auch Expertenwissen ein, d.h. beim Festlegen des Prädiktionsmodells sind Experten beteiligt. Konkrete Ausgestaltungen von statistischen Analysen zur Erstellung eines Prädiktionsmodells liegen im Rahmen von fachmännischem Handeln.

In einem Schritt c) des erfindungsgemäßen Verfahrens wird im Falle, dass das Wahrscheinlichkeitsmaß einer jeweiligen prädizierten Anfrage ein vorbestimmtes Schwellenkriterium erfüllt, die Verarbeitung der jeweiligen prädizierten Anfrage in der Auswerteeinheit durchgeführt und das Resultat der prädizierten Anfrage von der Auswerteeinheit an die jeweilige Applikation übertragen, so dass das Resultat der prädizierten Anfrage in der jeweiligen Applikation vor dem prädizierten Sendezeitpunkt empfangen wird. Aus dem Schwellenkriterium ergibt sich (explizit oder implizit) ein Mindestwahrscheinlichkeitsmaß. Das Schwellenkriterium kann z.B. durch einen Schwellenwert vorgegeben sein, wobei nur solche prädizierten Anfragen verarbeitet werden, deren Wahrscheinlichkeitsmaß den Schwellenwert überschreitet. Ebenso kann das Schwellenkriterium derart festgelegt sein, dass von den prädizierten Anfragen nur eine bestimmte Anzahl von Anfragen mit den größten Wahrscheinlichkeitsmaßen verarbeitet wird. Diese bestimmte Anzahl - genauso wie der obige Schwellenwert - kann ggf. konfigurierbar sein.

In einer bevorzugten Ausführungsform werden die Verarbeitung der jeweiligen prädizierten Anfrage und die nachfolgende Übertragung ihres Resultats derart festgelegt, dass das Resultat in der jeweiligen Applikation unmittelbar von dem prädizierten Sendezeitpunkt empfangen wird. Insbesondere wird der Zeitpunkt des Starts der Verarbeitung der Anfrage mit anschließender Übertragung des Resultats auf den spätestmöglichen Zeitpunkt festgelegt, für den noch sichergestellt ist, dass das Resultat der prädizierten Anfrage in der jeweiligen Applikation vor dem prädizierten Sendezeitpunkt empfangen wird.

Im Falle, dass die prädizierte Anfrage tatsächlich bei der jeweiligen Applikation auftritt (d.h. zum Aussenden durch die jeweilige Applikation erzeugt wird), unterdrückt die jeweilige Applikation das Aussenden dieser tatsächlich auftretenden Anfrage und greift auf das Resultat der prädizierten Anfrage zu. Die Information, auf welcher prädizierten Anfrage ein empfangenes Resultat beruht, ist in dem empfangenen Resultat enthalten.

Erfindungsgemäß gibt die jeweilige Applikation der Auswerteeinheit eine Rückmeldung, ob die jeweilige prädizierte Anfrage tatsächlich bei der jeweiligen Applikation in Schritt c) auftritt oder nicht. Dabei passt die Auswerteeinheit das Prädiktionsmodell basierend auf den oben beschriebenen Rückmeldungen der jeweiligen Applikationen an. Auf diese Weise kann die Qualität des Prädiktionsmodells verbessert werden, sofern festgestellt wird, das die prädizierten Anfragen nicht oder in abgewandelter Form bei der jeweiligen Applikation auftreten.

Das erfindungsgemäße Verfahren zeichnet sich dadurch aus, dass zukünftige Anfragen von Applikationen antizipiert werden und die entsprechenden Anfrageresultate vorab den Applikationen bereitgestellt werden. Hierzu werden an sich bekannte Prädiktionsmodelle genutzt, basierend auf denen die Anfragen vorhergesagt werden. Durch das Verfahren werden Latenzzeiten, die durch lange Übertragungsverzögerungen oder durch aufwändige Datenanalysen hervorgerufen werden, verkürzt.

Sofern es nicht möglich ist, eine prädizierte Anfrage in Schritt c) vor dem prädizierten Sendezeitpunkt an die Applikation zu übertragen, wird in einer bevorzugten Variante die prädizierte Anfrage sofort in der Auswerteeinheit verarbeitet, jedoch nur dann an die jeweilige Applikation übermittelt, falls eine der prädizierten Anfragen entsprechende tatsächliche Anfrage von der Auswerteeinheit empfangen wird.

Die von den jeweiligen Applikationen ausgesendeten Anfragen können zumindest zum Teil Anforderungen zum Abruf von Daten aus dem Datenspeicher darstellen, wobei die abgerufenen Daten in der jeweiligen Applikation basierend auf der durch die Anfrage spezifizierten Analyse analysiert werden. In diesem Fall werden durch die Anfrage lediglich die Daten aus dem Datenspeicher abgerufen, die zur Durchführung der Analyse benötigt werden. Ebenso können die Anfragen zumindest zum Teil Befehle zur Durchführung der in der Anfrage spezifizierten Analyse durch die Auswerteeinheit betreffen, wobei in diesem Fall die Datenanalyse direkt in der Auswerteeinheit durchgeführt wird. Das Resultat der Anfrage besteht in diesem Fall aus dem Resultat der in der Anfrage spezifizierten Analyse. Dieses Resultat wird von der Auswerteeinheit an die Applikation übertragen.

In einer weiteren bevorzugten Variante des erfindungsgemäßen Verfahrens wird in Schritt c) das Resultat der jeweiligen prädizierten Anfrage an die jeweilige Applikation über einen Subskriptions-Mechanismus übermittelt. Gemäß diesem Mechanismus subskribiert sich die jeweilige Applikation bei der Auswerteeinheit auf den Erhalt von Resultaten der prädizierten Anfragen von der Auswerteeinheit, so dass das Resultat der jeweiligen prädizierten Anfrage automatisch von der Auswerteeinheit an die jeweilige Applikation gesendet wird. Durch diesen Subskriptions-Mechanismus wird sichergestellt, dass das Resultat einer prädizierten Anfrage auch ohne Vorhandensein der tatsächlichen Anfrage an die jeweilige Applikation übertragen wird.

In einer Ausgestaltung der Erfindung passt die Auswerteeinheit das Prädiktionsmodell basierend auf neuen empfangenen Anfragen an.

In einer weiteren Variante erfolgt die obige Anpassung des Prädiktionsmodells derart, dass Parameter des Prädiktionsmodells verändert werden und/oder das Prädiktionsmodell basierend auf neuen Trainingsdaten maschinell gelernt wird, wobei die neuen Trainingsdaten neue aktualisierte Anfrage-Historien umfassen, die sich aus neuen empfangenen Anfragen ergeben.

Die Auswerteeinheit und der Datenspeicher können auf verschiedene Art und Weise realisiert werden. In einer Variante bilden Auswerteeinheit und Datenspeicher eine integrierte Speicher- und Recheneinheit. Ebenso ist es möglich, dass die Auswerteeinheit räumlich getrennt von dem Datenspeicher angeordnet ist. Darüber hinaus kann der Datenspeicher und/oder die Auswerteeinheit Bestandteil einer Rechner-Cloud sein.

Der im erfindungsgemäßen Verfahren verwendete Datenspeicher kann unterschiedlich ausgestaltet sein. In einer bevorzugten Ausführungsform liegt eine Version der im Datenspeicher enthaltenen Daten im Rohformat vor, d.h. es existiert eine Version der Daten, die nicht für bestimmte Anwendungen bzw. Applikationen vorverarbeitet wurde. Nichtsdestotrotz können zusätzlich auch Daten in vorverarbeiteter Form im Datenspeicher enthalten sein. Die soeben beschriebene Art von Datenspeicher wird oftmals auch als Data Lake bezeichnet.

Das erfindungsgemäße Verfahren kann in einer Vielzahl von technischen Anwendungsgebieten eingesetzt werden. In einer besonders bevorzugten Ausführungsform sind in dem Datenspeicher Sensordaten von einem oder mehreren technischen Systemen hinterlegt, insbesondere von einer oder mehreren elektrischen Energieerzeugungs- und/oder Energieverteil-Anlagen und/oder von einem oder mehreren medizinischen Geräten und/oder von einem oder mehreren Schienenfahrzeugen. Zum Beispiel können sich die Daten auf Energieerzeugungs-Anlagen in der Form von einer oder mehreren Gasturbinen oder auf Energieverteil-Anlagen in der Form von einer oder mehreren Transformatoren beziehen.

Im Zusammenhang mit der Analyse von Sensordaten von technischen Systemen existiert in einer bevorzugten Variante der Erfindung zumindest eine Applikation, welche mit Hilfe ihrer Anfragen eine Überwachung des oder der technischen Systeme basierend auf den Sensordaten durchführt und/oder Berichte über das oder die technischen Systeme basierend auf den Sensordaten erstellt, wobei die Berichte insbesondere Informationen zur Wartung des oder der technischen Systeme und/oder zur vorhergesagten Lebensdauer des oder der technischen Systeme umfassen. Die Applikationen können somit z.B. zur prädiktiven Wartung (englisch: predictive maintenance), zur Flottenanalyse oder zur Entscheidungsunterstützung von Geschäftseinheiten dienen.

Neben dem oben beschriebenen Verfahren betrifft die Erfindung ferner ein System aus Datenspeicher, Auswerteeinheit und einer oder mehreren Applikationen, wobei das System derart ausgestaltet ist, dass in dessen Betrieb Anfragen, die jeweils eine durchzuführende Analyse von Daten in dem Datenspeicher spezifizieren, von der oder den Applikationen an die Auswerteeinheit gesendet werden, wobei die Auswerteeinheit eine durch eine jeweilige Applikation gesendete und bei sich empfangene Anfrage mittels Zugriff auf den Datenspeicher verarbeitet und das sich hieraus ergebende Resultat der Anfrage an die jeweilige Applikation überträgt. Das System ist zur Durchführung des oben beschriebenen erfindungsgemäßen Verfahrens bzw. einer oder mehrerer bevorzugter Varianten des erfindungsgemäßen Verfahrens eingerichtet.

Die Erfindung betrifft darüber hinaus eine Auswerteeinheit, welche zur Verwendung als Auswerteeinheit in dem oben beschriebenen erfindungsgemäßen Verfahren bzw. einer oder mehrerer bevorzugter Varianten des erfindungsgemäßen Verfahrens bzw. in obigem erfindungsgemäßen System eingerichtet ist. Mit anderen Worten ist die Auswerteeinheit zur Durchführung derjenigen Schritte des erfindungsgemäßen Verfahrens bzw. bevorzugter Varianten dieses Verfahrens ausgestaltet, die durch die Auswerteeinheit durchgeführt werden. Im Besonderen ist die Auswerteeinheit zur Durchführung der obigen Schritte a) bis c) eingerichtet, wobei sie jedoch nicht den Teil des Schritts c) durchführt, der durch die Applikation vorgenommen wird.

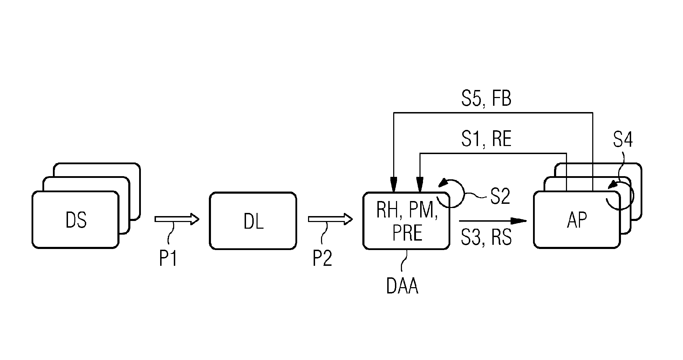

Ein Ausführungsbeispiel der Erfindung wird nachfolgend anhand der beigefügten Fig. 1 beschrieben. Diese Figur zeigt in schematischer Darstellung ein System zur Durchführung einer Variante des erfindungsgemäßen Verfahrens.

Das nachfolgend beschriebene Verfahren wird anhand des Zugriffs auf einen Datenspeicher in der Form eines sogenannten Data Lakes beschrieben. In einem solchen Data Lake sind große Mengen an Daten hinterlegt, wobei eine Version dieser Daten im Rohformat gespeichert ist, d.h. in einem Format, in dem die Daten nicht für bestimmte Anwendungen bzw. Applikation vorverarbeitet sind. Auf diese Weise wird die Verarbeitung der Daten durch verschiedene Applikationen unter Zugriff auf die Rohdaten ermöglicht. Je nach Ausgestaltung kann der Data Lake z.B. als Cloud-Speicher realisiert sein, d.h. er ist Bestandteil einer Cloud-Rechner-Architektur.

Der Datenspeicher bzw. Data Lake ist in Fig. 1 mit Bezugszeichen DL bezeichnet. Wie durch den Pfeil P1 angedeutet, stammen die Daten des Datenspeichers DL aus mehreren Datenquellen, welche einheitlich als DS bezeichnet sind. Je nach Ausführungsform können die Daten der Datenquellen DS z.B. kontinuierlich, periodisch, zeitgesteuert oder ereignisgesteuert an den Datenspeicher DL übertragen werden. Der Datenspeicher DL wechselwirkt ferner mit einer Auswerteeinheit DAA (DAA = Data Analytics Anticipator), welche eine erfindungswesentliche Komponente ist. Diese Auswerteeinheit DAA hat Zugriff auf den Datenspeicher DL und kann von diesem Daten anfordern bzw. abrufen, wie durch den Pfeil P2 angedeutet ist.

Die Auswerteeinheit DAA ist als Kombination aus Hardware und Software realisiert. In der hier beschriebenen Variante ist die Auswerteeinheit als eigenständige Rechnereinheit getrennt von den Datenspeicher DL ausgestaltet sein. Dabei erfolgt der Zugriff der Auswerteeinheit auf den Datenspeicher DL über eine geeignete Kommunikationsinfrastruktur (z.B. das Internet). Gegebenenfalls kann die Auswerteeinheit DAA auch als Rechner in einer Rechner-Cloud realisiert sein. Zum Beispiel können der Datenspeicher DL und die Auswerteeinheit DAA zu einer gemeinsamen Rechner-Cloud gehören. In einer weiteren Variante ist es auch möglich, dass der Datenspeicher DL und die Auswerteeinheit DAA ineinander integriert sind. Insbesondere kann die Auswerteeinheit DAA ein Bestandteil des Datenspeichers sein, d.h. die Auswerteeinheit kann als Software auf der Hardware des Datenspeichers realisiert sein.

Über die Auswerteinheit DAA werden Anfragen von verschiedenen Anwendungen bzw. Applikationen verarbeitet. Diese Applikationen sind in Fig. 1 einheitlich mit AP bezeichnet. Eine Applikation stellt dabei ein auf einem Rechner ausgeführtes Programm dar. Die Applikationen AP sind entfernt von der Auswerteeinheit DAA bzw. dem Datenspeicher DL angeordnet. Mit anderen Worten befinden sich die Rechnereinheiten, auf denen die Applikationen AP laufen, an einem anderen räumlichen Ort als die Auswerteeinheit DAA und der Datenspeicher DL. Die Applikationen kommunizieren mit der Auswerteeinheit DAA über eine geeignete Kommunikationsinfrastruktur (z.B. das Internet).

Nachfolgend werden die Schritte zur Verarbeitung von Anfragen einer Applikation in dem System der Fig. 1 erläutert. Die Schritte sind dabei über Pfeile gekennzeichnet. Gemäß Fig. 1 richtet eine Applikation AP in Schritt S1 eine Anfrage RE an die Auswerteeinheit DAA. Die Anfrage spezifiziert eine auf entsprechenden Daten des Datenspeichers DL durchzuführende Datenanalyse. In der hier beschriebenen Variante stellt die Anfrage RE einen Befehl dar, der die Auswerteeinheit DAA anweist, die spezifizierte Datenanalyse selbst durchzuführen und deren Resultat dann an die Applikation zurückzugeben. Gegebenenfalls kann die Anfrage jedoch auch lediglich dazu dienen, um über die Auswerteeinheit die für die spezifizierte Datenanalyse erforderlichen Daten abzurufen, die dann von der Auswerteeinheit an die Applikation weitergeleitet werden, welche anschließend selbst die Datenanalyse durchgeführt wird.

Herkömmlicherweise hat die Auswerteeinheit DAA lediglich die Aufgabe, die Anfragen zu verarbeiten und das entsprechende Resultat zurückzugeben. Dabei besteht jedoch das Problem, dass es bei aufwändigen Datenanalysen bzw. durch Latenzzeiten in der Kommunikationsinfrastruktur zu größeren Zeitverzögerungen kommen kann, bis das Anfrage-Ergebnis in der Applikation vorliegt. Dies kann für bestimmte Anwendungen jedoch nicht akzeptabel sein, wie z.B. bei einer Echtzeit-Überwachung von technischen Systemen, deren Sensordaten in dem Datenspeicher DL hinterlegt sind. Demzufolge übernimmt die Auswerteeinheit im Rahmen der Erfindung auch die Funktionalität der Prädiktion von zukünftigen Anfragen, die rechtzeitig vorab ausgeführt werden, so dass beim tatsächlichen Auftreten der Anfragen bei den Applikationen deren Ergebnisse bereits vorliegen, wie im Folgenden erläutert wird.

Von jeder empfangenen Anfrage RE werden durch die Auswerteeinheit die entsprechenden Parameter der Anfragen erfasst. Diese Parameter spezifizieren unter anderem die Art des Analyseverfahrens, wie z.B. ein Klassifikationsverfahren, ein Regressionsverfahren, Entscheidungsbäume, ein Clustering-Verfahren, Graphische Modelle, ein logikbasiertes Verfahren und dergleichen. Falls die Anfrage später auch zum Lernen eines Prädikationsmodells verwendet wird, ermittelt die Auswerteeinheit DAA den Sendezeitpunkt der entsprechenden Anfrage, indem ein Sendezeitstempel aus der Anfrage ausgelesen wird. Sollte die Zeitverzögerung der Datenübertragung von der Applikation zu der Auswerteinheit gering sein, kann als Sendezeitpunkt auch der Zeitpunkt des Empfangs der Anfrage in der Auswerteeinheit verwendet werden.

Aus vor dem Empfang der Anfrage RE erfassten Anfragen wurde in der Auswerteeinheit DAA eine Anfrage-Historie RH gebildet, wobei die aktuelle Anfrage RE dieser Historie hinzugefügt wird, wodurch die Anfrage-Historie RH aktualisiert wird. Die aktualisierte Anfrage-Historie RH wird als Eingangsgröße einem Prädiktionsmodelle PM zugeführt, das in der Auswerteeinheit DAA hinterlegt ist. Das Prädiktionsmodell prädiziert als Ausgabe eine zukünftige Anfrage PRE, die sich aus der aktualisierten Anfrage-Historie ergibt. Darüber hinaus wird für die prädizierte Anfrage auch ein Sendezeitpunkt der Anfrage bei der Applikation AP sowie eine Verarbeitungszeit für die Anfrage in der Auswerteeinheit DAA und eine Wahrscheinlichkeit prädiziert, mit der die prädizierte Anfrage tatsächlich von der Applikation erzeugt wird (d.h. bei der Applikation auftritt). Das Prädiktionsmodell PM wurde basierend auf einem geeigneten maschinellen Lernverfahren gelernt. Hierzu wurden Trainingsdaten genutzt, welche vorgegebene Anfrage-Historien umfassen und dabei für jede Anfrage-Historie angeben, welche Anfragen hierauf mit zugeordnetem Sendezeitpunkt und zugeordneter Verarbeitungsdauer sowie der entsprechenden Wahrscheinlichkeit des Auftretens folgen können. Entsprechende gelernte Prädiktionsmodelle sowie die zugeordneten Lernverfahren sind aus dem Stand der Technik bekannt. Beispielsweise kann als Prädiktionsmodell ein Neuronales Netz, Entscheidungsbäume, Support Vector Machines und dergleichen genutzt werden.

Gegebenenfalls besteht auch die Möglichkeit, dass das Prädiktionsmodell PM nicht maschinell gelernt wurde, sondern auf einer statistischen Analyse der obigen Trainingsdaten beruht. Mittels der statistischen Analyse kann dabei z.B. erfasst worden sein, wie häufig auf entsprechenden Anfrage-Historien bestimmte Anfragen mit zugeordnetem Sendezeitpunkt und zugeordneter Verarbeitungsdauer gefolgt sind. Hieraus kann dann ein Modell bestimmt werden, dass für neue Anfrage-Historien die zukünftige Anfrage mit Sendezeitpunkt und Verarbeitungsdauer sowie der Wahrscheinlichkeit ihres Auftretens angibt. Die konkrete Ausgestaltung einer derartigen statistischen Analyse liegt im Rahmen von fachmännischem Handeln.

Nach dem Anwenden des Prädiktionsmodells PM auf die Anfrage RE im Schritt S2 erhält man zumindest eine und in der Regel mehrere prädizierte Anfragen PRE mit zugehörenden prädizierten Sendezeitpunkten sowie Verarbeitungsdauern und Wahrscheinlichkeiten. Diese prädizierten Anfragen werden dann in einer Liste sortiert, welche Anfragen der entsprechenden Applikation zu ihren Wahrscheinlichkeiten zuordnet. Die Liste ist nach den Wahrscheinlichkeiten absteigend sortiert. In Abhängigkeit von einer Schwelle in der Form einer konfigurierbaren oder gelernten positiven ganzen Zahl n werden dann die n Anfragen aus der Liste mit den größten Wahrscheinlichkeiten zur Abarbeitung geplant.

Die in den n prädizierten Anfragen spezifizierten Datenanalysen werden dann wiederum im Rahmen von Schritt S2 durch die Auswerteeinheit DAA unter Zugriff auf den Datenspeicher DL ausgeführt. In einem Schritt S3 werden schließlich die sich daraus ergebenden Resultate RS an die anfragende Applikation übermittelt. Der Zeitpunkt des Starts einer Datenanalyse mit unmittelbar darauffolgender Übertragung des Resultats RS ist dabei unter Verwendung des Sendezeitpunkts und der Verarbeitungsdauer der jeweiligen prädizierten Anfrage derart gewählt, dass das Resultat der prädizierten Anfrage unmittelbar vor dem prädizierten Sendezeitpunkt zur Applikation AP gelangt.

Da die Resultate der prädizierten Anfragen nicht durch Aufforderung einer Applikation übermittelt werden, ist zwischen den jeweiligen Applikationen und der Auswerteeinheit ein Subskriptions-Mechanismus in Form einer Callback-Schnittstelle realisiert. Diese kann z.B. über ein an sich bekanntes Observer Pattern implementiert sein. Dabei subskribieren sich die Applikationen AP bei der Auswerteeinheit DAA auf den Erhalt der Resultate von prädizierten Anfragen. Hierfür teilen sie der Auswerteinheit ihre Adresse mit. Bei der Erzeugung eines Resultats einer prädizierten Anfrage wird dieses dann aufgrund der Subskription der entsprechenden Applikation automatisch an diese übertragen.

In einem Schritt S4 überprüft die Applikation AP, welche das Resultat RS einer prädizierten Anfrage PRE empfängt, ob die prädizierte Anfrage tatsächlich bei ihr auftritt. Sollte dies der Fall sein, liegen die Analyseresultate beim Auftreten der Anfrage bereits vor, und die Applikation unterbindet das Aussenden dieser tatsächlich aufgetretenen Anfrage. Stattdessen wird auf die bereits vorliegenden Analyseresultate durch die Applikation zugegriffen. Sollte die tatsächlich auftretende Anfrage von der prädizierten Anfrage abweichen, wird diese tatsächlich auftretende Anfrage hingegen an die Auswerteeinheit DAA geschickt, denn die entsprechenden Ergebnisse liegen der Applikation zu diesem Zeitpunkt nicht vor.

In einem letzten Schritt S5 wird von der Applikation AP eine Rückmeldung bzw. ein Feedback FB in der Form einer entsprechenden Nachricht an die Auswerteeinheit DAA gegeben. In diese Nachricht wird der Auswerteeinheit mitgeteilt, ob die prädizierte Anfrage korrekt war oder nicht. Diese Information wird dann von der Auswerteeinheit dazu verwendet, das Prädiktionsmodell in geeigneter Weise anzupassen, um die Qualität der Prädiktion zu verbessern. Alternativ kann die Auswerteeinheit auch basierend auf neu empfangenen Anfragen erkennen, ob die prädizierte Anfrage korrekt war oder nicht, denn im Falle, dass die prädizierte Anfrage nicht korrekt war, ist in einem Zeitfenster um den prädizierten Sendezeitpunkt mit dem Eintreffen einer Anfrage bei der Auswerteeinheit zu rechnen. Allgemein können durch die Analyse der Häufigkeit und zeitlichen Verteilung des Aussendens von Anfragen durch die jeweilige Applikation Rückschlüsse über die Qualität des Prädiktionsmodells gezogen werden, so dass basierend auf diesen Rückschlüssen das Prädiktionsmodell geeignet angepasst werden kann. Gegebenenfalls kann das Prädiktionsmodell auch basierend auf neu empfangenen Anfragen, die als neue Trainingsdaten einfließen, weiter gelernt werden.

Die im Vorangegangenen beschriebene Ausführungsform der Erfindung weist eine Reihe von Vorteilen auf. Insbesondere kann eine Datenanalyse für Daten eines Datenspeichers antizipiert werden, wobei hierfür vorzugsweise Methoden des maschinellen Lernens genutzt werden. Die Auslieferung von Analyseresultaten an die Applikationen kann somit wesentlich schneller erfolgen. Auf diese Weise werden Latenzzeiten zwischen Anfragen zur Datenanalyse und der Übermittlung der Analyseresultate durch vorausschauende Übertragung von prädizierten Analyseresultaten zu wahrscheinlich auftretenden Anfragen minimiert. Demzufolge können Applikationen mit hohen Performanzanforderungen bzw. niedrigen Latenzzeitforderung in Bezug auf die Ermittlung von Analyseresultate auch in Kommunikationsumgebungen genutzt werden, die diesen Anforderungen nicht genügen. Die erfindungsgemäße Lösung ist ferner vergleichsweise kostengünstig realisierbar.

## Patentansprüche

1. Verfahren zum rechnergestützten Verarbeiten von Anfragen (RE) zur Analyse von Daten in einem Datenspeicher (DL), wobei die Anfragen (RE) jeweils eine durchzuführende Analyse der Daten des Datenspeichers (DL) spezifizieren und von einer oder mehreren Applikationen (AP) an eine Auswerteeinheit (DAA) gesendet werden, wobei die Auswerteeinheit (DAA) eine von einer jeweiligen Applikation (AP) empfangene Anfrage (RE) mittels Zugriff auf den Datenspeicher (DL) verarbeitet und das sich hieraus ergebende Resultat (RS) der Anfrage (RE) an die jeweilige Applikation (AP) überträgt, bei dem
a) bei Empfang einer Anfrage (RE) einer jeweiligen Applikation (AP) in der Auswerteeinheit (DAA) eine Anfrage-Historie (RH), die durch die Auswerteeinheit (DAA) erfasst wurde und vergangene Anfragen der jeweiligen Applikation (AP) umfasst, aktualisiert wird, indem die Auswerteeinheit (DAA) die empfangene Anfrage (RE) zur Anfrage-Historie (RH) hinzufügt;
b) in der Auswerteeinheit (DAA) die aktualisierte Anfrage-Historie (RH) mittels eines Prädiktionsmodells (PM) verarbeitet wird, welches basierend auf Trainingsdaten umfassend vorgegebene Anfrage-Historien maschinell gelernt ist oder auf einer statistischen Analyse von Trainingsdaten umfassend vorgegebene Anfrage-Historien beruht, wodurch aus der aktualisierten Anfrage-Historie (RH) eine oder mehrere zukünftige Anfragen (PRE) prädiziert werden, denen jeweils ein prädizierter Sendezeitpunkt der Anfrage (PRE) in der jeweiligen Applikation (AP), eine prädizierte Verarbeitungsdauer der Anfrage (PRE) und ein Wahrscheinlichkeitsmaß für das Auftreten der Anfrage (PRE) bei der jeweiligen Applikation (AP) zugeordnet ist;
c) im Falle, das das Wahrscheinlichkeitsmaß einer jeweiligen prädizierten Anfrage (PRE) ein vorbestimmtes Schwellenkriterium erfüllt, die Verarbeitung der jeweiligen prädizierten Anfrage (PRE) in der Auswerteeinheit (DAA) durchgeführt wird und das Resultat (RS) der prädizierten Anfrage (PRE) von der Auswerteeinheit (DAA) an die jeweilige Applikation (AP) übertragen wird, so dass das Resultat (RS) der prädizierten Anfrage (PRE) in der jeweiligen Applikation (AP) vor dem prädizierten Sendezeitpunkt empfangen wird, wobei im Falle, dass die prädizierte Anfrage (PRE) tatsächlich bei der jeweiligen Applikation auftritt, die jeweilige Applikation (AP) das Aussenden dieser tatsächlich auftretenden Anfrage unterdrückt und auf das Resultat (RS) der prädizierten Anfrage (PRE) zugreift, wobei die jeweilige Applikation (AP) der Auswerteeinheit (DAA) eine Rückmeldung (FB) gibt, ob die jeweilige prädizierte Anfrage (PRE) tatsächlich bei der jeweiligen Applikation (AP) in Schritt c) auftritt oder nicht und die Auswerteeinheit (DAA) das Prädiktionsmodell (PM) basierend auf Rückmeldungen der jeweiligen Applikationen (AP) anpasst.

2. Verfahren nach Anspruch 1, bei dem die Anfragen (RE) zumindest zum Teil Anforderungen zum Abruf von Daten aus dem Datenspeicher (DL) sind, wobei die abgerufenen Daten in der jeweiligen Applikation basierend auf der durch die Anfrage (RE) spezifizierten Analyse analysiert werden, und/oder wobei die Anfragen (RE) zumindest zum Teil Befehle zur Durchführung der in der Anfrage (RE) spezifizierten Analyse durch die Auswerteeinheit (DAA) sind.

3. Verfahren nach Anspruch 1 oder 2, bei dem das in Schritt b) verwendete Prädiktionsmodell (PM) auf einem neuronalen Netz und/oder Entscheidungsbäumen und/oder Support Vector Machines und/oder einem Regressionsverfahren und/oder einem Clustering-Verfahren basiert.

4. Verfahren nach einem der vorhergehenden Ansprüche, bei dem in Schritt c) das Resultat (RS) der jeweiligen prädizierten Anfrage (PRE) an die jeweilige Applikation (AP) über einen Subskriptions-Mechanismus übermittelt wird, gemäß dem sich die jeweilige Applikation (AP) bei der Auswerteeinheit (DAA) auf den Erhalt von Resultaten (RS) der prädizierten Anfragen (PRE) von der Auswerteeinheit (DAA) subskribiert, so dass das Resultat (RS) der jeweiligen prädizierten Anfrage (PRE) automatisch von der Auswerteeinheit (DAA) an die jeweilige Applikation (AP) gesendet wird.

5. Verfahren nach einem der vorhergehenden Ansprüche, bei dem die Auswerteeinheit (DAA) das Prädiktionsmodell (PM) basierend auf neuen empfangenen Anfragen (RE) anpasst.

6. Verfahren nach einem der vorhergehenden Ansprüche, bei dem die Anpassung des Prädiktionsmodells derart erfolgt, dass Parameter der Prädiktionsmodells (PM) verändert werden und/oder das Prädiktionsmodell basierend auf neuen Trainingsdaten maschinell gelernt wird, wobei die neuen Trainingsdaten neue aktualisierte Anfrage-Historien (RH) umfassen, die sich aus neuen empfangenen Anfragen (RE) ergeben.

7. Verfahren nach einem der vorhergehenden Ansprüche, bei dem die Auswerteeinheit (DAA) und der Datenspeicher (DL) eine integrierte Speicher- und Recheneinheit bilden oder bei dem die Auswerteeinheit (DAA) räumlich getrennt von dem Datenspeicher (DL) angeordnet ist.

8. Verfahren nach Anspruch 7, bei dem der Datenspeicher (DL) und/oder die Auswerteeinheit (DAA) Bestandteil einer Rechner-Cloud sind.

9. Verfahren nach einem der vorhergehenden Ansprüche, bei dem eine Version der im Datenspeicher (DL) enthaltenen Daten im Rohformat vorliegt.

10. Verfahren nach einem der vorhergehenden Ansprüche, bei dem in dem Datenspeicher (DL) Sensordaten von einem oder mehreren technischen Systemen hinterlegt sind, insbesondere von einer oder mehreren elektrischen Energieerzeugungs- und/oder Energieverteil-Anlagen und/oder von einem oder mehreren medizinischen Geräten und/oder von einem oder mehreren Schienenfahrzeugen.

11. Verfahren nach Anspruch 10, dass zumindest eine Applikation (AP) mit Hilfe ihrer Anfragen (RE) eine Überwachung des oder der technischen Systeme basierend auf den Sensordaten durchführt und/oder Berichte über das oder die technischen Systeme basierend auf den Sensordaten erstellt, wobei die Berichte insbesondere Informationen zur Wartung des oder der technischen Systeme und/oder zur vorhergesagten Lebensdauer des oder der technischen Systeme umfassen.

12. System aus Datenspeicher (DL), Auswerteeinheit (DAA) und einer oder mehreren Applikationen (AP), wobei im Betrieb des Systems Anfragen (RE), die jeweils eine durchzuführende Analyse von Daten in dem Datenspeicher (DL) spezifizieren, von der oder den Applikationen (AP) an die Auswerteeinheit (DAA) gesendet werden, wobei die Auswerteeinheit (DAA) eine von einer jeweiligen Applikation (AP) empfangene Anfrage (RE) mittels Zugriff auf den Datenspeicher (DL) verarbeitet und das sich hieraus ergebende Resultat (RS) der Anfrage (RE) an die jeweilige Applikation (AP) überträgt, wobei das System zur Durchführung eines Verfahren nach einem der Ansprüche 1 bis 11 eingerichtet ist.

13. Auswerteeinheit, welche zur Verwendung als Auswerteeinheit in einem Verfahren nach einem der Ansprüche 1 bis 11 eingerichtet ist.
